Europäisches Patentamt

**European Patent Office**

Office européen des brevets

(11) Veröffentlichungsnummer : **0 055 381**
**B1**

(12) **EUROPÄISCHE PATENTSCHRIFT**

(45) Veröffentlichungstag der Patentschrift :
28.11.84

(21) Anmeldenummer : 81109248.5

(22) Anmeldetag : 29.10.81

(51) Int. Cl.³ : **A 23 L 1/08**, A 23 L 1/30,
**A 23 K 1/00**

(54) Verfahren zur Herstellung eines ein Bienenprodukt enthaltenden Konzentrats, Bienenprodukt enthaltendes Konzentrat und seine Verwendung.

(30) Priorität : 29.12.80 DE 3049380

(43) Veröffentlichungstag der Anmeldung :
07.07.82 Patentblatt 82/27

(45) Bekanntmachung des Hinweises auf die Patenterteilung : 28.11.84 Patentblatt 84/48

(84) Benannte Vertragsstaaten :
AT CH DE FR GB IT LI

(56) Entgegenhaltungen :
DE-A- 2 853 194
DE-A- 2 919 059
FR-A- 2 244 409
US-A- 3 780 185
US-A- 4 075 783

(73) Patentinhaber : Schanze, Rudolf
Friedenstrasse 43
D-8034 Unterpfaffenhofen (DE)

(72) Erfinder : Schanze, Rudolf
Friedenstrasse 43
D-8034 Unterpfaffenhofen (DE)

(74) Vertreter : Kraus, Walter, Dr. et al
Patentanwälte Kraus & Weisert Irmgardstrasse 15
D-8000 München 71 (DE)

Jouve, 18, rue St-Denis, 75001 Paris, France

**Beschreibung**

Die Erfindung betrifft ein Verfahren zur Herstellung von Bienenprodukte enthaltenden Konzentraten, Bienenprodukte enthaltenden Konzentraten und ihre Verwendung.

Der Markt an Nahrungsmitteln und diätetischen Produkten wird unter anderem auch mit zunehmenden Mengen von Bienenprodukten, insbesondere Honig beliefert. Bienenprodukte sind auch Blütenpollen, in Honig beliefert. Bienenprodukte sind auch Blütenpollen, in Honig aufgelösten Blütenpollen, um Propolis bzw. Bienenbrot und Gemische solcher Bienenprodukte, die sich durch sehr gute diätetische und gesundheitsfördernde Eigenschaften auszeichnen. Die Bedeutung des Honigs und anderer Bienenprodukte als Nahrungs-, Genuß- und Heilmittel beruht in der Hauptsache auf de Gehalt an leicht resorbierenden Kohlenhydraten, Enzymen, auf Appetit anregenden aromatischen Substanzen und nicht zuletzt auf Mineralbestandteilen und Spurenelementen, die in Bienenprodukten vorkommen. In medizinischer Hinsicht ist von besonderer Bedeutung das Vorkommen von Acetylcholin im Honig, ein Stoff, der als cholinegischer Faktor Blutdruck senkend und anregend auf Magen- und Darmtätigkeit wirkt. Bemerkenswert sind schließlich noch die bakteriellen Hemmstoffe, die bei der günstigen Einwirkung von Honig auf Wunden eine Rolle spielen.

Vielen der oben erwähnten Produkte ist gemeinsam, daß sie wenig lange haltbar sind, in Verbindung mit Honig zu Bodensatz neigen, oft eine unerwünschte Kristallisation ergeben und teilweise einen unangenehmen Geschmack aufweisen. Z. B. weisen Blütenpollen oder Bienenbrot eine heuartige Geruchs- und Geschmacksnote auf, die viele Verbraucher abstößt.

Man hat deshalb mit Erfolg versucht, beispielsweise durch Zugabe von Alkohol und Aromen diese Eigenschaft zu verbessern. Ein weiterer Nachteil der Bienenprodukte ist ihre geringe Haltbarkeit. Bedingt durch den hohen Wassergehalt, altern Bieneprodukte und insbesondere Propolis und Pollen schnell und verderben leicht.

Es ist auch bekannt, Diätprodukte mit Pollen, Propolis und Gelee Royal anzureichern (vgl. FR-PS 2 244 409 und FR-PS 1 121 244). Zur Verabreichung von den oben erwähnten Bienenprodukten wird oft Honig mit ihnen vermischt, damit die Haltbarkeit verlängert und der Geschmack verbessert wird. Durch den Honig wird es jedoch praktisch unmöglich, die Produkte in feste Form zu bringen und man ist daher auf Dragees, Tabletten oder Kapseln angewiesen. Dies führte naturgemäß zu einer weiteren Verteuerung der ohnehin sehr teuren und in geringen Mengen verfügbaren Bienenprodukte.

In der DE-PS 923 158 wird ein Verfahren zur Herstellung eines nicht hygroskopischen diätetischen Nähr- und Kräftigungsmittel beschrieben, bei dem Honig zu Milch gegeben wird, das Gemisch längere Zeit mit hoher Tourenzahl gerührt wird und das Gemisch dann durch Eindampfen und Versprühen getrocknet wird. Dieses bekannte Verfahren besitzt den Nachteil, daß der Anteil der Feststoffe, die aus dem Honig stammen, maximal 10 %, bezogen auf 100 % Trockenmasse, sein kann. Will man Produkte herstellen, die einen höheren Gehalt an Honigprodukten aufweisen, läßt sich die Sprühtrocknung nicht mehr durchführen. An den Wänden der Sprühtrocknungsanlage, beispielsweise eines Trockenturms, bilden sich Beläge. Verwendet man beispielsweise ca. 20 % Honig, so bricht das System zusammen, und eine Trocknung ist nicht mehr möglich.

In der DE-OS 2 919 059 wird eine Buttermilch-Honig-Zubereitung in trockener Form als diätetisches Lebensmittel beschrieben. Diese Buttermilch-Honig-Zubereitung wird hergestellt, indem man Trockenbuttermilch, d. h. Buttermilchpulver und Bienenhonig verrührt, zusammen während längerer Zeit, im allgemeinen zwei bis drei Tage ruhen läßt, um sich umzusetzen und dann erst das gelagerte Gemenge zu Trockenprodukt endgültig zerkleinern kann. Dieses bekannte Verfahren besitzt den Nachteil, daß es nur mit einem trockenen Pulver durchgeführt werden kann und daß die Reaktionzeiten sehr lange sind. Auf Seite 6 im dritten Absatz der genannten DE-OS wird ausgeführt, daß anstelle von Buttermilchpulver kein anderes Milchproteinpulver verwendet werden kann, da man dabei Produkte mit unangenehmen Geschmack erhält.

In der US-PS 3 780 185 wird ein Verfahren zur Herstellung eines trockenen Honig enthaltenden Produktes beschrieben, bei dem Sojaproteinisolat mit Trockenmilch und getrocknetem Honig vermischt wird. Bei diesem bekannten Verfahren muß die Milch in Pulverform verwendet werden, und es enthält als Hauptbestandteil Sojaproteinisolat.

In der DE-OS 2 853 194 wird ein Verfahren eines Sojaproteinhaltigen Diät- und Heilnahrungsproduktes beschrieben, welches Sojabohnenprotein und Bienenhonig enthält.

Es besteht daher schon seit langem ein Bedarf, die oben erwähnten Bienenprodukte in eine Form zu bringen, die leicht haltbar und bequem handhabbar ist.

Der vorliegenden Erfindung liegt daher die Aufgabe zugrunde, Bienenprodukte, wie Bienenpollen, Bienenbrot und Propolis, auf einfache Weise in eine haltbare Dauerform zu überführen Vorzugsweise soll das erhaltene Produkte fest und granuliert oder pulverförmig sein. Erfindungsgemäß sollen weiterhin die Bienenprodukte in ihren Werten ergänzt und in diätetisch hochwertige Produkte überführt werden.

Überraschenderweise wurde gefunden, daß man, wenn man Bienenprodukte zu Milchproduktkonzentraten zugibt und das erhaltene Gemisch rührt und trocknet und vermahlt, die Bienenprodukte in hochwertige Produkte überführen kann.

Gegenstand der Erfindung ist ein Verfahren zur Herstellung eines ein Bienenprodukt enthaltenden Konzentrats, das dadurch gekennzeichnet ist, daß man Bienenpollen, Bienenbrot, Propolis, Honig, Wachs oder ihre Gemische zu Konzentraten mit 25-50 Gew.-% Trockenmasse aus Vollmilch, Magermilch, einweißangereicherten Filtraten der Membrantrennung von Milchen, verschiedenen Molken oder anderen Nebenprodukten der Milchindustrie oder ihren Gemischen gibt, zu dem Gemisch aus Bienenprodukt und Milchprodukt Kohlehydrate hinzufügt und das erhaltene Gemisch bei einer Temperatur von 15 bis 75 °C während einer Zeit von 10 bis 60 min bis zur homogenen Verteilung rührt und anschließen trocknet, wobei die Zugabe der einzelnen Bestandteile so erfolgt, daß das erhaltene Produkt 10 bis 40 Gew.-% Trockenmasse, die aus Bienenprodukten stammt ; 25 bis 70 Gew.-% Trockenmasse, die aus Milchprodukten stammt ; 3 bis 55 Gew.-% Trockenmasse, die aus Kohlehydraten stammt ; bezogen auf die Gesamttrockenmasse, enthält.

Gemäß einer erfindungsgemäßen bevorzugten Ausführungsform wird das Reaktionsgemisch vor dem Trocknen eingedampft. Gemäß einer weiteren bevorzugten Ausführungsform wird das Reaktionsprodukt nach dem Trocknen zerkleinert und/oder zermahlen.

Die Erfindung betrifft weiterhin die bei dem Verfahren erhaltenen Bienenprodukte enthaltenden Konzentrate.

Das bei dem erfindungsgemäßen Verfahren Bienenprodukte enthaltende Konzentrat enthält, bezogen auf die Gesamttrockenmasse,

10-40 Gew.-% Trockenmasse, die aus Bienenprodukten stammt,

25-70 Gew.-% Trockenmasse, die aus Milchprodukten stammt,

3 bis 55 Gew.-% Trockenmasse, die aus Kohlehydraten stammt,

0 bis 10 Gew.-% Trockenmasse, die aus Hefen oder anderen Mikroorganismen stammt,

0 bis 25 Gew.-% Trockenmasse, die aus anderen Zusatzstoffen stammt.

Erfindungsgemäß enthält das Produkt 10 bis 40 Gew.-% Trockenmasse, die aus Bienenprodukten stammt. Davon können 0 bis 10 % Trockenmasse aus Wachs stammen. Das Wachs muß jedoch nicht in dem Bienenprodukt vorhanden sein.

Bienanwachs ist reich an Vitamin A (ca. 40 Tsd IE/kg), im wesentlichen jedoch für den Menschen unverdaulich ; es hat jedoch günstige Wirkungen auf die Verdauungsorgane und besonders den Atmungstrakt. In Verbindung mit dem Gemenge nach dem Verfahren ist es geeignet, physiologisch als Ballast zu wirken und die Hygroskopizität des Endprodukts herabzusetzen, so daß neben einer guten Konsistenz auch eine gute Misch- und Lagerstabilisät erreicht werden kann. Es soll — bei Bedarf — in das Gemenge mit Anteilen zwischen 0 bis 10 %, bevorzugt 0 bis 8 % und besonders bevorzugt mit 0 bis 5 %, eingeführt werden. Dies besonders in Präparaten, die der Erhaltung der Widerstandskraft gegen Infektionen dienen.

Die Erfindung betrifft ebenfalls die Verwendung der Bienenprodukte enthaltenden Konzentrate als Diätetikum, Aufbaumittel oder Stärkemittel für Menschen und Tiere, als Kleinkinder- und Sportpräparate oder als Ergänzungsfutter für junge Tiere.

Überraschenderweise wurde gefunden, daß durch die Kombination der Bienenprodukte mit Milchprodukten die Bienenprodukte in pulverförmige Konzentrate überführt werden können. Das erfindungsgemäße Produkt besitzt weiterhin den Vorteil, daß die Milchminerale, Milcheiweiß und die Vitamine der Milch und die organischen Säuren der Milch den Geschmack, den Wert der Bienenprodukte und des Honigs ergänzen, so daß man ein hochwertiges biologisches Konzentrat erhält.

Erfindungsgemäß werden Bienenpollen, Propolis, Bienenbrot oder Honig oder ihre Gemische verwendet. Bevorzugt verwendet man Honig oder ein Gemisch aus Honig, Bienenpollen, Propolis oder Bienenbrot.

Bei einer besonders bevorzugten Ausführungsform wird Bienenpollen verwendet, der bereits in Honig aufgelöst ist.

Erfindungsgemäß werden weiterhin die Milchprodukte in Form von Konzentraten mit 25 bis 50 Gew.-% Trockenmasse, bevorzugt 30 bis 40 Gew.-% Trockenmasse, bezogen auf die Gesamttrockenmasse, verwendet. Solche Produkte erhält man, indem man die Vollmilch, Magermilch, eiweißangereicherten Filtrate der Membrantrennung von Milchen, Molken oder andere Nebenprodukte der Milchindustrie in an sich bekannter Weise eindickt. Zu solchen Konzentraten, die Temperaturen im Bereich von 15 bis 25 °C aufweisen können, gibt man unter Rühren die Bienenprodukte, wie Blütenpollen, Pollen bzw. Bienenbrot, die bereits in Honig aufgelöst sind, Propolis oder Honig oder ihre Gemische. Die Zugabe der Bienenprodukte kann auf einmal erfolgen, man kann auch die Bienenprodukte innerhalb einer Zeit von beispielsweise 10 bis 35 min langsam zufließen lassen. Dies soll jedoch keine Beschränkung sein. Man kann auch gegebenenfalls zuerst eines der oben genannten Bienenprodukte zufügen und dann weiteren Honig zugeben. In kurzer Zeit lösen sich die Bienenprodukte auf, und es erfolgt eine homogene Verteilung. Man rührt so lange, bis diese homogene Verteilung erreicht ist. Überraschenderweise fördert die Zähigkeit der Milchkonzentrate die schnelle und volle Auflösung vollständig. Bei dem Rühren und der Zugabe verwendet man Temperaturen von 15 bis 75 °C. Verwendet man kein Wachs sondern die oben erwähnten Bienenprodukte, so arbeitet man im allgemeinen bei Temperaturen von 15 bis 45 °C, vorzugsweise 25 bis 35 °C. Lediglich bei der zusätzlichen Verwendung von bis zu 10 % Bienenwachs soll die Temperatur zur Verteilung des höherschmelzenden Wachses kurzfristig bis zu maximal 75 °C angehoben werden, oder das auf diese Temperatur erhitzte dünnflüssige Wachs wird unter heftigem Rühren in dem Reaktionsgemisch dispergiert, wobei in diesem Fall die Gesamttemperatur nicht über 45 °C erhöht wird, damit die Enzyme nicht inaktiviert werden. Die Zeit, die zum Rühren erforderlich ist, kann variieren und beträgt beispielsweise 10 min bis 1 h. Im allgemeinen ist jedoch eine homogene Verteilung nach kurzer Zeit, beispielsweise nach 10 bis 15 min, erreicht.

Zu dem erhaltenen Konzentrat aus Milchprodukt und Bienenprodukt kann man gegebenenfalls noch andere Zusatzstoffe, wie Zucker, Konservierungsmittel, Farbstoffe, Aromastoffe, Süßstoffe, Mineralien, Spurenelemente, Emulgatoren, Vitamine, insbesondere Vitamin-B-Komplex, Enzyme, Aminosäuren, spezifische Eiweißergänzungen und/oder dergleichen, oder ihre Gemische zusetzen. Vorzugsweise gibt man zu den Produkten noch Zucker hinzu. Als Zucker kann man ergänzende Zucker, wie zum Beispiel Maltose, Saccharose, Sorbose, Mannose usw., verwenden.

Erfindungsgemäß kann man zu dem Gemisch aus Bienenprodukt und Milchprodukt noch andere Kohlehydrate als Zucker, beispielsweise Getreidemehle beliebiger Art, hinzu geben, so daß sie sich mit der Flüssigkeit sättigen und gleichmäßig durch starkes Rühren homogen verteilen können. Die Kohlehydrate können zu einem Konzentrat zugegeben werden, welches bereits die Zusatzstoffe enthält. Man kann aber auch die Zusatzstoffe nach der Zugabe der Kohlehydrate hinzufügen.

Als Kohlehydrate kann man beispielsweise verwenden : Getreideflocken, Weizenkeime und Kleberprodukte (Korngluten), α-Cellulosen, Hemicellulosen und ähnliche Produkte. Man kann auch Kartoffelstärke, Kartoffelmehl und Getreidemehl und Getreidenachprodukte, wie von Reis, Mais, Gerste, Weizen, Hafer, Roggen, Hirse usw., verwenden.

Gemäß einer weiteren Ausführungsform der Erfindung gibt man zu dem Konzentrat aus Milchprodukt, Bienenprodukt und Kohlehydrate Hefen, Hefeextrakte, Single-Cellproteine und/oder andere Mikroorganismen. Die Zugabe dieser Produkte erfolgt nach der Zugabe der Kohlehydrate, wobei es jedoch keine Rolle spielt, ob das Konzentrat schon die Zusatzstoffe enthält. Die Zusatzstoffe können auch gegebenenfalls nach der Zugabe dieser Produkte zu dem Konzentrat zugefügt werden.

Die Zugabe von Hefen besitzt den Vorteil, daß Enzyme, Vitamin-B-Komplex und spezifische Eiweißergänzungen hinzugefügt werden.

Gemäß der Erfindung werden die verschiedenen oben erwähnten Produkte so vermischt, daß man Produkte erhält, die, bezogen auf die Gesamttrockenmasse,

10 bis 40 Gew.-%, bevorzugt 15 bis 30 Gew.-%, Trockenmasse, die aus Bienenprodukten stammt, incl. 0-10 Gew.-% Wachs,

25 bis 70 Gew.-%, bevorzugt 30 bis 50 Gew.-%, Trockenmasse, die aus Milchprodukten stammt,

3 bis 55 Gew.-%, bevorzugt 10 bis 40 Gew.-%, am meisten bevorzugt 15 bis 35 Gew.-%, Trockenmasse, die aus Kohlehydraten stammt,

0 bis 10 Gew.-%, bevorzugt 2 bis 8 Gew.-%, Trockenmasse, die aus Hefen, Single-Cellproteinen oder anderen Mikroorganismen stammt, und

0 bis 25 Gew.-%, bevorzugt 0 bis 15 Gew.-%, besonders bevorzugt 2 bis 8 Gew.-%, Trockenmasse, die aus anderen Zusatzstoffen stammt,
enthalten.

Wie zuvor angegeben, enthalten die erfindungsgemäßen Produkte bevorzugt immer Honig. Der Honig kann in einer Menge von 10 bis 40 Gew.-% Trockenmasse, die aus dem Honig stammt, bezogen auf die Gesamttrockenmasse, vorhanden sein. Vorzugsweise ist er in einer Menge von 10 bis 20 Gew.-% Trockenmasse, die aus Bienenprodukten stammt, vorhanden. Es ist jedoch nicht erforderlich, daß die Bienenprodukte zwingenderweise Honig enthalten, d. h. sie können auch honigfrei sein.

In der folgenden Tabelle I sind Beispiele für Rezepturen für erfindungsgemäße Konzentrate angegeben.

Tabelle I

| Bestandteil | % Trockenmasse Beispiele | | | Technische Hinweise |
|---|---|---|---|---|
| | 1 Präparat zur Gesunderhaltung | 2 Präparat zur Infektabwehr | 3 Aufbaupräparat | |
| Milchprodukte | | | | Vorlage als flüssiges warmes (25-40 °C) Konz. |
| Vollmilch oder Magermilch oder ihre Gemische | 25-50 | 10-30 | 5-25 | |
| Eiweißkonzentrat aus Ultrafiltr. | 0-10 | 15-30 | 0-10 | zusammen min. 25-max. 70 |
| Mineralkonzentrat aus Zuckerei, oder Elektro-Dialyse | 0-25 | 0-10 | 0-25 | |

Tabelle I (Fortsetzung)

| Bestandteil | % Trockenmasse Beispiele | | | Technische Hinweise |
| | 1 | 2 | 3 | |
| | Präparat zur Gesunderhaltung | Präparat zur Infektabwehr | Aufbaupräparat | |
|---|---|---|---|---|
| **Bienenprodukte** | | | | Zugabe zu dem Milchkonzentrat |
| Honig | 5-35 | 5-15 | 5-25 | |
| Bienenpollen | 5-15 | 5-15 | 5-25 | zusammen min. |
| Propolisextrakt | | | | 10-max. 40 |
| 10-25-%ig | — | 0-10 | 0-10 | |
| Wabenwachs | 0-5 | 0-10 | 0-5 | |
| **Stützprodukte** | | | | Zugabe zu dem Gemisch aus Milch + Bienenprodukt |
| Bierhefen, Einzeller, andere Mikro-Org. | 0-10 | 0-10 | 0-10 | |
| Kohlenhydrate bzw. Stärkeprodukte | 20-40 | 10-40 | 5-40 | zusammen min. |
| α-Cellulosen | 0-10 | 0-10 | 0-15 | 0-max. 65 |
| Zucker verschiedener Arten, Malzextrakte | 0-10 | 0-10 | 0-15 | |
| Mineralstoffe und Spurenelemente, Pflanzenasche | 0-10 | 0-15 | 0-20 | |
| andere Zusatzstoffe z. Bsp. Aromen, Vitamine, Aminosäuren, Süßstoffe | 0-5 | 0-7 | 0-8 | |

Beim Vermengen der Milchprodukte und der Bienenprodukte erhält man ein Naßgut, das aus flüssigem Milchprodukt und darin dispergiert einem festen Bienenprodukt oder darin gelöst einem flüssigen Bienenprodukt und dispergierten Kohlehydraten und/oder Hefen und gelösten oder dispergierten Zusatzstoffen besteht.

Diese sämige bis zähplastische Masse, deren Trockenmassegehalte im Bereich von 25 bis 60 %, vorzugsweise 45 bis 55 %, liegen, kann, wenn besonders schonende Trocknung erwünscht ist, über Sprühtürme, sonst über Walzen getrocknet werden. Überraschenderweise zeigt es sich, daß die Milchprodukte trotz Zugabe des Honiganteils und der Bienenprodukte, die für sich so gut wie nicht trocknungsfähig sind, nicht leiden und unverändert bleiben.

Die Endtrocknung kann über den Turm oder die Walze erfolgen. Bevorzugt verwendet man Stahlwalzen mit niederem Dampfdruck zur Schonung der Inhaltsstoffe und zum Aufbau von dicken Filmschichten, so daß Flocken oder Granulate erhalten werden.

Bezüglich der Trocknung mittels Walzentrocknern ist es verfahrensgemäß besonders vorteilhaft, auf erst kürzlich entwickelte Stahlwalzen zurückzugreifen. Solche Walzen bestehen anstelle von dickwandigen Gußzylindern aus dünnwandigen Stahlzylindern, deren Oberfläche verchromt ist. Dies hat den Vorteil, daß der Wärmedurchtritt durch die Metallwandung wesentlich verbessert ist. Als Effekt solcher Stahlwalzen kann die Trocknungstemperatur bzw. der Dampfdruck um etwa die Hälfte reduziert werden, gleichzeitig steigt zusätzlich die Trocknungsgeschwindigkeit des aufgetragenen Naßgutfilms, so daß mit extrem niedriger Temperatur und erhöhter Umdrehungszahl, d. h. mit einer drastischen Verkürzung der Trockenzeit, gefahren werden kann. Damit werden die wärmeempfindlichen Vitamine und Enzyme aus den Bienenprodukten gegen Inaktivierung und Verlust geschützt, und das Endprodukt bleibt in seinen biologischen Eigenschaften fast völlig unvermindert enthalten.

Trocknet man beispielsweise über Walzen, so erhält man einen trockenen- spröden Film, der bis zu 5 % Restwasser enthalten kann. Das Produkt fällt in Flocken an, oder es kann weiter vermahlen werden.

In einer größeren Versuchsreihe wurden die Prozentsätze erarbeitet, die in trockene Dauerformen von Bienenproduktkonzentraten überführt werden können. Diese sind in der folgenden Tabelle II zusammengefaßt.

**0 055 381**

Tabelle II

| Gemengteile | Beispiele für Trocknung über | |
| --- | --- | --- |
| | Sprühturm Prozentanteile als Gewicht | Walze Prozentanteile als Gewicht |
| | in der Trockenmasse (Naßgut = Endprodukt = 100) | |
| Honig | 10-20 | 15-30 |
| Bienenpollen ⎫<br>Bienenbrot ⎭ | 5-25 | 10-30 |
| Propolis | 1-5 | 2-10 |
| Bienenwachs | 0-8 | 0-10 |
| Vollmilch, ⎫<br>Magermilch ⎭ | 25-85 | 25-50 |
| Zuckerarten | 5-10 | 0-20 |
| Getreidemehle, Stärkeprodukte, Kohlehydrate | 5-10 | 20-40 |
| Kasein, Kaseinate | 0-10 | 0-20 |
| Molken und andere Milchnebenprodukte | 0-35 | 0-35 |
| Hefen, Einzellerproteine, Mikroorganismen | 0-10 | 5-20 |
| Konzentrationsgrad | 30-45 | 35-60 |
| sonstige Zusatzstoffe | 0-5 | 0-7 |

Erfindungsgemäß können somit Milchprodukte, Bienenprodukte sowie gegebenenfalls Zusatzstoffe, bevorzugt Zucker, Kohlehydrate und Hefen, miteinander kombiniert und verarbeitet werden, wodurch eine Vielzahl von verschiedenen Produkten erhalten werden, die

hohe biologische und diätetische Wertigkeiten, ein angenehmes Aussehen, einen sehr guten Geruch und Geschmack,

außerordentliche Haltbarkeit und Lagerstabilität, eine umfassende Verwendung als Endprodukt oder Bestandteil in anderen Produkten aufweisen.

Die erfindungsgemäßen Produkte können weiterhin auf günstige Weise wirtschaftlich hergestellt werden.

Die erfindungsgemäßen Produkte finden Verwendung als Diätetikum, Aufbaumittel oder Stärkemittel für Menschen und Tiere, als Kleinkinder- oder Sportpräparate oder als Ergänzungsfutter für junge Tiere.

Die folgenden Beispiele erläutern die Erfindung.

### Beispiel 1

Allgemeines Ausführungsbeispiel

In einen Reaktor gibt man das Milchproduktkonzentrat. Unter heftigem Rühren fügt man zu dem Milchkonzentrat das Bienenprodukt und dann wird 1 1/2 bis 2 Stunden gerührt.

Zu dem erhaltenen Gemenge fügt man Zucker und/oder Getreidemehl sowie gegebenenfalls Aromastoffe.

Das erhaltene Gemenge wird dann über Trockenwalzen oder einen Sprühturm geführt und bis zu einem Restwassergehalt von 0,5 bis 5 % getrocknet.

### Beispiel 2

Man arbeitet wie in Beispiel 1 beschrieben.

Die verwendeten Produkte, die jeweiligen Massen in kg, die kg Trockenmasse sind in der folgenden Tabelle aufgeführt.

(Siehe Tabelle Seite 7 f.)

| Beispiel | Masse kg | kg-Trockenmasse |
|---|---|---|
| 1 Vorlage Magermilch Trockenmassengehalt (= TS) 35 % | 110 | 38,5 |
| 2 Bienenprodukt bestehend aus je 1 Gewichtsteil Pollen und Bienenhonig, 80 % TS | 50 | 40 |
| 3 Traubenzucker, Rübenzucker oder Rohrzucker | 15 | 15 |
| 4 Aromastoffe | 0,01 | 0,01 |
| 5 Getreidemehl 85 % TS | 42 | 35,7 · |
| Gemenge | 217,01 | 129,21 · |
| Wasserzugabe | 41,41 | 129,21 · |
| Naßgutgemenge | 258,42 | 129,21 |
| Trockenmassengehalt | (100) | 50 % |

Beispiele 3 bis 5

Man arbeitet wie in Beispiel 2 beschrieben und verwendet anstelle von 110 kg Magermilchkonzentrat jeweils

110 kg Vollmilchkonzentrat (Beispiel 3)
110 kg Molkenkonzentrat (Beispiel 4) oder
110 kg Konzentratmischung von Milchprodukt (Biepsiel 5)

Man erhält in allen Fällen angenehm schmeckende Produkte in Pulver- bzw. Granulatform.

**Ansprüche**

1. Verfahren zur Herstellung eines ein Bienenprodukt enthaltenden Konzentrats, dadurch gekennzeichnet, daß man Bienenpollen, Bienenbrot, Propolis, Honig, gegebenenfalls Wachs, oder ihre Gemische zu Konzentraten mit 25-50 Gew.-% Trockenmasse aus Vollmilch, Magermilch, eiweißangereicherten Filtraten der Membrantrennung von Milchen, verschiedenen Molken oder anderen Nebenprodukten der Milchindustrie oder ihren Gemischen gibt, zu dem Gemisch aus Bienenprodukt und Milchprodukt Kohkehydrate hinzufügt und das erhaltene Gemisch bei einer Temperatur von 15 bis 75 °C während einer Zeit von 10 bis 60 min bis zur homogenen Verteilung rührt und anschließend trocknet, wobei die Zugabe der einzelnen Bestandteile so erfolgt, daß das erhaltene Produkt
10 bis 40 Gew.-% Trockenmasse, die aus Bienenprodukten stammt ;
25 bis 70 Gew.-% Trockenmasse, die aus Milchprodukten stammt ;
3 bis 55 Gew.-% Trockenmasse, die aus Kohlehydraten stammt ;
bezogen auf die Gesamttrockenmasse, enthält.
2. Verfahren nach Anspruch 1, dadurch gekennzeichnet, daß man vor dem Trocknen eindampft.
3. Verfahren nach Anspruch 1 oder 2, dadurch gekennzeichnet, daß man nach dem Trocknen zerkleinert und zemahlt.
4. Verfahren nach Anspruch 1, 2 oder 3, dadurch gekennzeichnet, daß man zu dem Gemisch aus Bienenprodukt, Milchprodukt und Kohlehydrate Hefen, Single-Cellproteine oder andere Mikroorganismen oder ihre Gemische in solcher Menge zugibt, daß das Endprodukt bis zu 10 Gew.-% Trockenmassen die aus Hefen, Single-Cellproteinen oder anderen Mikroorganismen oder ihren Gemischen stammt, bezogen auf die Gesamttrockenmassen, enthält.
5. Verfahren nach Anspruch 1, 2, 3 oder 4, dadurch gekennzeichnet, daß man zu dem Gemisch aus Bienenprodukt, Milchprodukt und Kohlehydrate, welches gegebenenfalls Hefen, Single-Cellproteine oder andere Mikroorganismen oder ihre Gemische enthalten kann, Zusatzstoffe in solcher Menge zugibt, daß das Endprodukt bis zu 25 Gew.-% Trockenmasse, die aus solchen Zusatzstoffen stammt, enthält.
6. Verfahren nach Anspruch 5, dadurch gekennzeichnet, daß man als Zusatzstoffe Zucker, Konservierungsmittel, Farbstoffe, Aromastoffe, Süßstoffe, Mineralien, Spurenelemente, Enzyme, Vitamine, Emulgatoren, Aminosäuren, spezifische Eiweißergänzungen oder ihre Gemische zugibt.
7. Bienenprodukte enthaltendes Konzentrat, dadurch gekennzeichnet, daß es nach einem der Verfahren der Ansprüche 1 bis 4 erhalten worden ist.
8. Verwendung der Bienenprodukte enthaltenden Konzentrate nach Anspruch 7 als Diätetikum, Aufbaumittel oder Stärkemittel für Menschen und Tiere, als Kleinkinder- und Sportpräparate oder als Ergänzungsfutter für junge Tiere.

# 0 055 381

## Claims

1. A process for the production of a concentrate containing a bee product, characterized in that bee pollen, beebread, propolis, honey, optionally wax or mixtures thereof are added to concentrates containing from 25 to 50 % by weight of dry matter of whole milk, skimmed milk, protein-enriched filtrates from the membrane separation of milk, various wheys or other by-products of the milk industry, or mixtures thereof, carbohydrates are added to the mixture of beed product and milk product and the mixture obtained is stirred for 10 to 60 minutes at 15 to 75 °C until a homogeneous dispersion is obtained and is then dried, the individual components being added in such quantities that the product obtained contains

from 10 to 40 % by weight of dry matter emanating from bee products ;
from 25 to 70 % by weight of dry matter emanating from milk products ;
from 3 to 55 % by weight of dry matter emanating from carbohydrates ;
based on the total dry matter content.

2. A process as claimed in Claim 1, characterized in that the mixture is concentrated by evaporation before drying.

3. A process as claimed in Claim 1 or 2, characterized in that drying is followed by size-reduction and grinding.

4. A process as claimed in Claim 1, 2 or 3, characterized in that yeasts, single-cell proteins or other micro-organisms or mixtures thereof are added to the mixture of bee product, milk product and carbohydrate in such a quantity that the end product contains up to 10 % by weight of dry matter emanating from yeasts, single-cell proteins or other micro-organisms or mixtures thereof, based on the total dry matter content.

5. A process as claimed in Claim 1, 2, 3 or 4, characterized in that additives are added to the mixture of bee product, milk product and carbohydrates, which may optionally contain yeasts, single-cell proteins or other micro-organisms or mixtures thereof, in such a quantity that the end product contains up to 25 % by weight of dry matter emanating from those additives.

6. A process as claimed in Claim 5, characterized in that sugar, preservatives, dyes, flavorings, sweeteners, minerals, trace elements, enzymes, vitamins, emulsifiers, amino acids, specific protein supplements or mixtures thereof are used as the additives.

7. A concentrate containing beed products, characterized in that it has been obtained by the process claimed in Claims 1 to 4.

8. The use of the concentrates containing beed products claimed in Claim 7 as a dietetic, nutrient or tonic for humans and animals, as infant and sports preparations or as a supplementary feed for young animals.

## Revendications

1. Procédé pour la fabrication d'un concentré contenant un produit apicole, caractérisé en ce que l'on ajoute au pollen, au pain d'abeille, au propolis, au miel, le cas échéant à la cire, ou à leurs mélanges, 25 à 50 % en poids de matières séchées composées de filtrats de laits, de différents petits laits ou d'autres sous-produits de l'industrie laitière ou de leurs mélanges, enrichis de lait entier, de lait écrémé, de protéines ; en ce que l'on ajoute des hydrates de carbone au mélange de produit apicole et de produit laitier ; en ce que le mélange ainsi obtenu est homogénéisé par agitation à une température de 15 à 75 °C pendant 10 à 60 mn, puis séché, les proportions des différents composants du produit fini par rapport à la quantité totale de matière séchée étant les suivantes :

10 à 40 % en poids de matière sèche, provenant de produits apicoles,
25 à 70 % en poids de matière sèche, provenant de produits laitiers,
3 à 55 % en poids de matière sèche, provenant d'hydrates de carbone.

2. Procédé selon la revendication 1, caractérisé en ce que l'on procède à une évaporation avant le séchage.

3. Procédé selon l'une quelconque des revendications 1 ou 2, caractérisé en ce que l'on procède à un concassage et à une pulvérisation après le séchage.

4. Procédé selon l'une quelconque des revendications 1, 2 ou 3, caractérisé en ce que l'on ajoute au mélange de produit apicole, de produit laitier et d'hydrates de carbone, des levures, des protéines monocellulaires ou d'autres microorganismes ou leurs mélanges dans une proportion telle que le produit fini contienne jusqu'à 10 % en poids de matières séchées provenant de levures, de protéines monocellulaires ou d'autres microorganismes ou de leurs mélanges, par rapport à la quantité totale de matières sèches.

5. Procédé selon l'une quelconque des revendications 1, 2, 3 ou 4, caractérisé en ce que l'on ajoute au mélange de produit apicole, de produit laitier et d'hydrates de carbone, qui peut, le cas échéant, contenir des levures, des protéines monocellulaires ou d'autres microorganismes ou leurs mélanges, des adjuvants dans une proportion telle que le produit fini contienne jusqu'à 25 % en poids de matière sèche provenant de tels adjuvants.

8

6. Procédé selon la revendication 5, caractérisé en ce que les adjuvants sont des sucres, des conservateurs, des colorants, des aromatisants, des édulcorants, des minéraux, des oligo-éléments, des enzymes, des vitamines, des émulsifiants, des acides aminés, des compléments spécifiques de protéines ou leurs mélanges.

7. Concentré contenant des produits apicoles, caractérisé en ce qu'il a été obtenu selon l'un des procédés décrits dans les revendications 1 à 4.

8. Utilisation des concentrés contenant des produits apicoles selon la revendication 7 en tant que produit diététique, reconstituants ou fortifiants pour les humains et les animaux, en tant que préparations pour les enfants en bas âge et les sportifs ou en tant que complément alimentaire pour les jeunes animaux.